# EUROPEAN PATENT SPECIFICATION

(11) **EP 2 791 582 B1**
(45) Date of publication and mention of the grant of the patent: **23.11.2016**
(21) Application number: 12826618.6
(22) Date of filing: 14.12.2012
(51) Int. Cl.: F24B 7/04, F24B 9/00, F24D 3/18, F24H 6/00

(54) **BURNING STOVE COMBINED WITH A STIRLING ENGINE FOR PRODUCING ELECTRICITY OR TO BE COUPLED TO A HEAT PUMP**
BRENNER MIT STIRLING MOTOR FÜR DIE ERZEGUNG VON ELEKTRIZITÄT ODER ZUR KOPPLUNG MIT EINER WÄRMEPUMPE
CHAUDIÈRE DE COMBUSTION COMBINÉE À UN MOTEUR STIRLING POUR PRODUIRE DE L'ÉLECTRICITÉ, OU DESTINÉE À ÊTRE COUPLÉE À UNE POMPE À CHALEUR

(30) Priority: 14.12.2011 IT CS20110038
(43) Date of publication of application: 22.10.2014
(73) Proprietor: Ungaro SRL, 88040 S.Mango D'Aquino CZ (IT)
(72) Inventor: UNGARO, Antonio, 88040 San Mango d'Aquino (IT)
(74) Representative: Perrotta, Aldo
(86) International application number: PCT/EP2012/075488
(87) International publication number: WO 2013/087814

(56) References cited:
- EP-A2- 1 887 266
- DE-A1- 10 244 343
- DE-B3-102005 037 540
- JP-A- 58 221 340

## Description

### Technical Field of the invention

The present invention relates to a stove burning a liquid, solid or gaseous combustible combined with a Stirling engine adapted to produce electricity or to be coupled to a heat pump and to produce heat both with hot water and with air.

### State of the art

There have been some attempts to produce in a combined way heat and electriciy using stoves for home heating.

So far none of the devices for the combined production of heat and electricity has been successful.

The patent application WO2010057483A1 describes one of these devices. The heater of the Stirling engine is directly in contact with the combustion chamber and the distribution of the heat produced by the burner is not uniform on the surface of the heater.

The patent application WO01090656A1 describes a device for the combined production of heat and power that includes two burners where a first burner is used to produce heat and a second device to produce power. This device separates the burners and allocates one burner for the production of heat and one for the production of mechanical or electrical energy. In this way, the one that provides heat has the disadvantage that it does not produce mechanical or electrical energy and the one that produces mechanical energy or electric does not supply heat, such a device has, therefore, the disadvantage of dispersing a considerable part of energy.

EP 1 887 266 A2 discloses a further example of combined storve.

### Description of the invention

The device of the present invention has the object to provide a stove that uses the same burners for supplying heat both to be transformed into mechanical or electrical energy through a Stirling engine and to generate heat that will be used for home heating, having the aim to heat uniformly the heater surface of the Stirling engine with the combustion gases at a higher temperature and to use the combustion gases at a lower temperature after having passed on the heater head of the Stirling engine for home heating both with air and with water.

This object is achieved through the implementation of a burning stove combined with a Stirling engine for producing electricity or to be coupled to a heat pump where the heater of said Stirling engine is placed inside the stove characterized in that said stove comprises two or more burners arranged on the same plan and that the axis of the heater of the Stirling engine passes through the barycenter of said two or more burners.

In this way, the heater is preferably invested from one part and from the other part or from several parts by warmer combustion gases exploiting better the heat and obtaining a more efficient utilization of the heat, because later the heat can be exploited for heating a house.

Another characteristic is given by the fact that said stove comprises a tube positioned, in line with said heater, between the burners and the head of the heater.

To prevent overheating of the heater head of the Stirling engine a tube is positioned between the burners, said tube further enhances the distribution on the lateral surface of the head of the Stirling engine.

Another characteristic is given by the fact that said stove comprises also two or more deflectors placed between the head of the heater and the inner walls of the stove.

The heat is preferably, but not exclusively directed on the side surface of the head of the Stirling engine further increasing the efficiency of the Stirling engine.

Another characteristic is given by the fact that said stove is a pellet stove that has two or more supply lines each placed on each burner and everyone at the same distance from each of these burners.

A particular embodiment is given in a pellet stove in which the same symmetry of the burners is respected for the supply lines in order to give optimum performance with a homogeneous heating on the surface of the heater head of the Stirling engine.

Another characteristic is given by the fact that said heater further comprises one or more heat exchangers.

In order to improve the thermal efficiency of the stove or to better convey heat in different rooms from that in which the stove object of the present invention is placed, the heat of combustion fumes after touching the heater head of the Stirling engine is passed through heat exchangers.

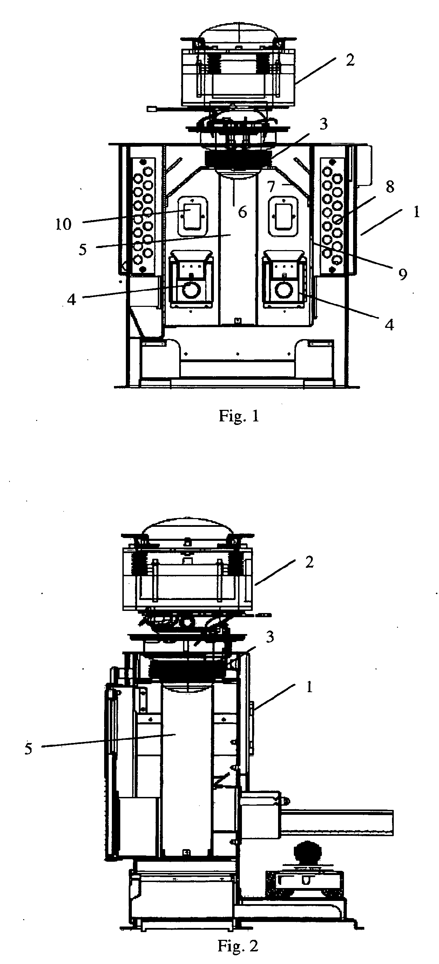

Other features and advantages of the present invention will become clear from the description hereinafter of an embodiment of the present invention given by way of non-limiting example in figures 1 and 2.

### Brief description of the figures.

Figure 1 represents a frontal section of a burning stove combined with a Stirling engine, object of the present invention;
Figure 2 is a section of a burning stove combined with a Stirling engine, object of the present invention.

### Detailed description of an embodiment of the present invention

Referring to Figures 1 and 2 we see the combination of a burning stove 1 with a Stirling engine 2. The burning stove 1 in the figures is drawn by way of example, but not limitative, as a pellet stove, but can be a combustion stove functioning with other gaseous, liquid or solid fuel.

The heater 3 of the Stirling engine 2 is placed inside the burning stove 1, which comprises two or more burners 4 arranged on the same plane and in whose barycentre passes the axis of the heater 3 of the Stirling engine 2. Above each burner 4, in the example burners of a pellet stove, there is arranged a feed opening of the pellet 10. In this way we obtain a homogeneous distribution of heat on the useful surface of the heater 3 of the Stirling engine 2.

In order to improve the distribution of heat on the surface of the heater 3 of the Stirling engine 2, the burning stove 1 comprises a tube 5 that is disposed between the burners 4 and the head 6 of the heater 3 that two or more deflectors 7 are placed between the head 6 of the heater 3 and the walls 9 of the stove 1 for better directing the fumes of the combustion products from the burners 4 on the side surface of the heater 3 of the Stirling engine 2.

The combination of burning stove and Stirling engine of the present invention can be advantageously used both for the production of heat and for the production of electricity for cooling rooms.

In the case of the production of electricity the Stirling engine is coupled to a generator of electricity while in the case of cooling rooms the Stirling engine is coupled to a heat pump which can be by way of example but not exclusively driven by the Stirling engine.

The residual heat of combustion after touching the head 6 of the heater 3 of the Stirling engine can advantageously be collected from the heat exchangers 8 arranged in the stove 1 which shall distribute it to the heating system which can be with air or water.

As one can easily understand the combustion stove 1 combined with a Stirling engine 1 can operate either alone as a boiler for heating or as a heater for hot air production, for the production of electricity when the Stirling engine is activated or as a cogeneration plant for the combined production of electricity and heat for space heating or, finally, as cooling system for summer air-conditioning of the house.

The invention, it should be noted, is not limited to the representations given in the figures, but may be perfected and modified by those skilled in the art without, however, exceeding the limits of patent.

The invention permits numerous advantages, and to overcome difficulties that could not otherwise have been overcome with the systems on sale at present.

## Claims

1. Burning stove (1) combined with a Stirling engine (2) for producing electricity or to be coupled to a heat pump where the heater of said Stirling engine (3) is placed inside the stove (1), said stove comprises two or more burners (4), **characterized in that** the burners are arranged on the same plane and that the axis of the heater (3) of the Stirling engine (2) passes through the barycenter of said two or more burners (4).

2. Burning stove (1) combined with a Stirling engine (2) for producing electricity or to be coupled to a heat pump according to claim 1 **characterized in that** said stove (1) comprises a tube (5) positioned, in line with said heater (3), between the burners (4) and the head (6) of the heater (3).

3. Burning stove (1) combined with a Stirling engine (2) for producing electricity or to be coupled to a heat pump according to claim 2 **characterized in that** said stove comprises also two or more deflectors (7) placed between the head of the heater (3) and the inner walls (9) of the stove (1).

4. Burning stove (1) combined with a Stirling engine (2) for producing electricity or to be coupled to a heat pump according to claim 2 **characterized in that** said stove is a pellet stove that has two or more supply lines (10) each placed on each burner (4) and everyone at the same distance from each of these burners (4).

5. Burning stove (1) combined with a Stirling engine (2) for producing electricity or to be coupled to a heat pump according to claim 4 **characterized in that** said stove comprises also one or more heat exchangers (8).

## Patentansprüche

1. Verbrennungsofen (1), kombiniert mit einem Stirlingmotor (2) zur Erzeugung von Elektrizität oder um mit einer Hitzepumpe gekoppelt zu sein, wobei der Heizer des Stirlingmotors (3) innerhalb des Ofens (1) angeordnet ist, wobei der Ofen zwei oder mehrere Brenner (4) umfasst, **dadurch gekennzeichnet, dass** die Brenner auf der gleichen Ebene angeordnet sind, und dass die Achse des Heizers (3) des Stirlingmotors (2) durch das Baryzentrum der zwei oder mehreren Brenner (4) verläuft.

2. Verbrennungsofen (1), kombiniert mit einem Stirlingmotor (2) zur Erzeugung von Elektrizität oder um mit einer Hitzepumpe gekoppelt zu sein nach Anspruch 1, **dadurch gekennzeichnet, dass** der Ofen (1) ein Rohr (5) umfasst, das in Reihe mit dem Heizer (3) zwischen den Brennern (4) und dem Kopf (6) des Heizers (3) positioniert ist.

3. Verbrennungsofen (1), kombiniert mit einem Stirlingmotor (2) zur Erzeugung von Elektrizität oder um mit einer Hitzepumpe gekoppelt zu sein nach Anspruch 2, **dadurch gekennzeichnet, dass** der Ofen auch zwei oder mehrere Leitbleche (7) umfasst, die zwischen dem Kopf des Heizers (3) und den Innenwänden (9) des Ofens (1) angeordnet sind.

4. Verbrennungsofen (1), kombiniert mit einem Stirlingmotor (2) zur Erzeugung von Elektrizität oder um mit einer Hitzepumpe gekoppelt zu sein nach Anspruch 2, **dadurch gekennzeichnet, dass** der Ofen ein Pelletofen ist, der zwei oder mehrere Versorgungsleitungen (10) aufweist, von denen jede auf jedem Brenner (4) angeordnet ist und jeweils im gleichen Abstand von jedem dieser Brenner (4).

5. Verbrennungsofen (1), kombiniert mit einem Stirlingmotor (2) zur Erzeugung von Elektrizität oder um mit einer Hitzepumpe gekoppelt zu sein nach Anspruch 4, **dadurch gekennzeichnet, dass** der Ofen auch einen oder mehrere Wärmetauscher (8) umfasst.

## Revendications

1. Poêle à combustion (1) associé à un moteur Stirling (2) pour produire de l'électricité ou pour être couplé à une pompe à chaleur où l'élément chauffant dudit moteur Stirling (3) est placé à l'intérieur du poêle (1), **caractérisé en ce que** le poêle comprend deux ou plusieurs brûleurs (4), les brûleurs sont disposés sur le même plan et que l'axe de l'élément chauffant (3) du moteur Stirling (2) passe par le barycentre de deux ou plusieurs desdits brûleurs (4).

2. Poêle à combustion (1) associé à un moteur Stirling (2) pour produire de l'électricité ou pour être couplé à une pompe à chaleur selon la revendication 1, **caractérisé en ce que** ledit poêle (1) comprend un tube (5) positionné, en ligne avec ledit élément chauffant (3), entre les brûleurs (4) et la tête (6) de l'élément chauffant (3).

3. Poêle à combustion (1) associé à un moteur Stirling (2) pour produire de l'électricité ou pour être couplé à une pompe à chaleur selon la revendication 2, **caractérisé en ce que** ledit poêle à combustion comprend en outre deux ou plusieurs déflecteurs (7) placés entre la tête de l'élément chauffant (3) et les parois intérieures (9) du poêle (1).

4. Poêle à combustion (1) associé à un moteur Stirling (2) pour produire de l'électricité ou pour être couplé à une pompe à chaleur selon la revendication 2, **caractérisé en ce que** ledit poêle est un poêle à pellets qui a deux ou plusieurs lignes d'alimentation (10), chacune placée sur chaque brûleur (4) et chacune à la même distance de chacun de ces brûleurs (4).

5. Poêle à combustion (1) associé à un moteur Stirling (2) pour produire de l'électricité ou pour être couplé à une pompe à chaleur selon la revendication 4, **caractérisé en ce que** ledit poêle comprend en outre un ou plusieurs échangeurs de chaleur (8).
